# EUROPÄISCHE PATENTSCHRIFT

(11) **EP 3 366 103 B1**
(45) Veröffentlichungstag und Bekanntmachung des Hinweises auf die Patenterteilung: **04.09.2019**
(21) Anmeldenummer: 18157324.7
(22) Anmeldetag: 19.02.2018
(51) Int. Cl.: A01D 34/73

(54) **MESSER EINES RASENMÄHERS**
BLADE OF A LAWNMOWER
COUTEAU D'UNE TONDEUSE À GAZON

(30) Priorität: 25.02.2017 DE 102017001859
(43) Veröffentlichungstag der Anmeldung: 29.08.2018
(73) Patentinhaber: Andreas Stihl AG & Co. KG, 71336 Waiblingen (DE)
(72) Erfinder: Gutmann, Christoph, 6250 Kundl (AT); Zimmermann, Sven, 6323 Bad Häring (AT)
(74) Vertreter: Zurhorst, Stefan

(56) Entgegenhaltungen:
- EP-A1- 2 923 553
- FR-A1- 2 611 422
- US-A1- 2007 227 113
- US-B1- 6 978 590

## Beschreibung

Die Erfindung betrifft ein Messer eines Rasenmähers mit den Merkmalen nach dem Oberbegriff des Anspruchs 1.

Messer von Rasenmähern weisen in üblicher Bauform eine Hoch- bzw. Drehachse auf, um die herum sie im Betrieb drehend angetrieben werden. Um diese Hochachse herum sind typischerweise zwei, gelegentlich auch mehr Messerflügel angeordnet, welche radial außenseitig der Hochachse jeweils einen Schneidenabschnitt mit einer vorlaufenden, geschärften Schneidkante und einer nachlaufenden Hinterkante aufweisen. Die Funktion des Messers beschränkt sich nicht allein auf das Abschneiden von Gras und anderem Schnittgut mittels der genannten Schneidkante. Die Messerflügel wirken auch als aerodynamische Leitelemente, welche im Mähbereich eine Luftströmung erzeugen, die dann ihrerseits für einen Abtransport des abgetrennten Schnittgutes sorgt. Sowohl die Schnittwirkung als auch die aerodynamische Wirkung des Messers erfordern einerseits eine ausreichende Antriebsleistung, sorgen aber andererseits für eine mitunter nicht unerhebliche Geräuschentwicklung.

Aus der EP 2 923 553 ist ein Messer eines Rasenmähers bekannt, dessen Schneidenabschnitte im Querschnitt betrachtet jeweils eine obere Kontur und eine untere Kontur aufweisen. Keilförmige Schrägflächen bilden zusammen mit den zugehörigen unteren Konturen entsprechende Schneidkanten, die auf Höhe der zugeordneten unteren Kontur liegen. Oberhalb davon sind die oberen Konturen über mindestens die Hälfte der Flügeltiefe durch jeweils eine obere Kurve bestimmt, wobei die obere Kurve krümmungsstetig und zumindest abschnittsweise konvex in Richtung zur Hinterkante ansteigt. Auch bei den Messern nach US 2007/227113 A1, FR 2 611 422 A1 und US 6,978,590 B1 liegen die Schneidkanten unterhalb der oberen Kurve auf Höhe der unteren Kontur.

Bei einem Rasenmähermesser liegt das vordergründige Entwicklungsziel in der Erzeugung einer möglichst guten Schnitt- und Fangleistung gemessen an der verfügbaren Antriebsleistung. Darüber hinaus gilt es, zunehmend strenger werdende Lärmschutzvorschriften zu beachten, wobei es jedoch nicht ohne weiteres gelingt, gute Schnitt- und Fangleistung und geringe Geräuschentwicklung zu vereinen.

Der Erfindung liegt die Aufgabe zugrunde, ein gattungsgemäßes Messer eines Rasenmähers derart weiterzubilden, dass dessen Betriebsgeräusche bei guter Schnitt- und Fangleistung vermindert sind.

Diese Aufgabe wird durch ein Messer mit den Merkmalen des Anspruchs 1 gelöst.

Die Erfindung basiert auf der Idee, den Querschnitt des Messerflügels als aerodynamisches Profil anzusehen und dieses den Erfordernissen in geeigneter Weise anzupassen. Insbesondere folgt die Erfindung dabei dem Ansatz, bei der Profilanpassung nicht eine freie Umströmung, sondern eine dreidimensionale Umströmung unter der Schutzhaube bzw. innerhalb des Strömungskanals des Rasenmähers zu Grunde zu legen. Demnach weist der Schneidenabschnitt im Querschnitt des Messerflügels betrachtet eine von der Schneidkante ausgehende und zur Hinterkante laufende, in der gewöhnlichen Einbauposition obere Kontur auf. Nach der Erfindung ist vorgesehen, dass die obere Kontur ausgehend von der Schneidkante über mindestens die Hälfte der Flügeltiefe durch eine obere Kurve bestimmt ist, wobei die obere Kurve krümmungsstetig und zumindest abschnittsweise konvex in Richtung zur Hinterkante ansteigt, wobei die obere Kurve am Ort der Schneidkante in einem Eintrittswinkel zur Schnittrichtung verläuft, und wobei der Eintrittswinkel in einem Bereich von einschließlich 0° bis einschließlich 5°, bevorzugt in einem Bereich von einschließlich 1,5° bis einschließlich 3,0° liegt.

In einer freien Umströmung gilt zwar die Saugseite eines angestellten aerodynamischen Profils regelmäßig als die problematische, zu Wirbelablösungen neigende Seite. Es hat sich jedoch überraschend gezeigt, dass es in der dreidimensionalen Umströmung eines eingebauten Rasenmähermesser vor allem die vorlaufende Oberfläche ist, welche strömungsmechanisch die Druckseite darstellt, und an welcher eine bestimmte Modifikation die gewünschte Geräuschminderung bei gleichzeitig guter Schnitt- und Fangleistung herbeiführt. Die eingangs erwähnten erfindungsgemäßen Parameter zur Bestimmung der oberen Kurve, welche ihrerseits die obere Kontur des Flügelquerschnitts zumindest größtenteils bestimmen, vermeiden oder reduzieren zumindest zuverlässig die Bildung von Ablösewirbeln. Die hieraus folgende gleichmäßigere Umströmung führt einerseits zu einem abgesenkten Geräuschpegel, während andererseits eine gute Schnitt- und Fangleistung unterstützt wird. Die verbesserte aerodynamische Umströmung der Messerflügel zieht außerdem eine Verringerung des Leistungsbedarfes nach sich, was auf Seiten des Antriebsmotors zu einer weiteren Verminderung des Energiebedarfs und der Geräuschemissionen beiträgt.

Im genannten Eintrittswinkelbereich wird eine kantennahe Wirbelbildung trotz scharfer Schneid- bzw. Eintrittskante vermieden. In vorteilhafter Weiterbildung der Erfindung, demnach die Krümmung der oberen Kurve am Ort der Schneidkante gleich Null ist, wird dies noch unterstützt. Der sich hieran anschließende krümmungsstetige Kurvenverlauf sorgt dafür, dass die Strömung im weiteren Verlauf entlang der Flügeloberseite ausreichend verwirbelungsfrei bleibt. Dies wird zweckmäßig dadurch sichergestellt, dass die obere Kurve durch ein krümmungsstetiges Bezierpolynom dritten Grades bestimmt ist. Der krümmungsstetige Verlauf muss aber nicht notwendig für die gesamte Flügeltiefe gelten. Zur Erzielung der gewünschten Effekte wurde aufgefunden, dass die obere Kontur ausgehend von der Schneidkante über mindestens die Hälfte der Flügeltiefe, bevorzugt über mindestens 75% und insbesondere über mindestens 90% der Flügeltiefe durch die krümmungsstetige und konvexe obere Kurve bestimmt ist. Der verbleibende Anteil der Flügeltiefe kann beispielsweise durch eine Fase oder durch andere geometrische Querschnittsanpassungen bestimmt sein, die insbesondere eine gesteuerte Strömungsablösung im Endkantenbereich begünstigen.

In zweckmäßiger Weiterbildung der Erfindung weist der Schneidenabschnitt im Querschnitt des Messerflügels betrachtet eine von der Schneidkante ausgehende und zur Hinterkante laufende, in der gewöhnlichen Einbauposition untere Kontur mit einem tiefsten Punkt auf, wobei die Schneidkante im Querschnitt des Messerflügels betrachtet oberhalb des genannten tiefsten Punktes liegt. Außerdem ist die untere Querschnittskontur durch eine untere Kurve bestimmt, wobei die untere Kurve zwischen dem genannten tiefsten Punkt und der Schneidkante einen vorderen Kurvenabschnitt aufweist. Die erste Ableitung der unteren Kurve ist im tiefsten Punkt gleich null, demnach die Kurve also dort horizontal verläuft. Außerdem sind die erste Ableitung und insbesondere auch die zweite Ableitung der unteren Kurve in ihrem vorderen Kurvenabschnitt, also ausgehend von der Schneidkante bis zum tiefsten Punkt stetig.

Außerdem weist die genannte untere Kurve zwischen dem tiefsten Punkt und der Hinterkante einen hinteren Kurvenabschnitt auf. In vorteilhafter Weiterbildung der Erfindung gehen der vordere Kurvenabschnitt und der hintere Kurvenabschnitt im tiefsten Punkt tangentenstetig ineinander über. Der Messerflügel weist am Ort des tiefsten Punktes eine bestimmte Materialdicke auf, während die Schneidkante im Querschnitt des Messerflügels betrachtet um das Maß einer Schneidentiefe vor dem tiefsten Punkt liegt. In einer bevorzugten Ausführungsform liegt das Verhältnis der Schneidentiefe zur Materialdicke in einem Bereich von einschließlich 6,0 bis einschließlich 2,0 und insbesondere in einem Bereich von einschließlich 5,0 bis einschließlich 3,0.

Damit entsteht insgesamt ein gleichmäßig gekrümmter, knickfreier Kurven- bzw. Querschnittsverlauf auf der Unterseite des jeweiligen Messerflügels. Dieser entspricht der Sogseite eines aerodynamischen Profils, welche in Folge des genannten Krümmungsverlaufes sauber von Luft umströmt wird. Die Ausbildung von Wirbeln, insbesondere von oberflächennahen Ablösewirbeln ist signifikant verringert, was zu einer ebenso signifikanten Verringerung der Betriebsgeräusche führt. Schließlich führt die genannte Positionierung der Schneidkante in Verbindung mit der verbesserten Strömungsausbildung zu einer sauberen Durchtrennung des Schnittgutes, so dass sich bei gegebener Antriebsleistung eine sehr gute Mähleistung ergibt.

In einer bevorzugten Ausführungsform weisen die Messerflügel angrenzend an die Hochachse jeweils einen Wurzelabschnitt auf, wobei sich der Wurzelabschnitt des jeweiligen Messerflügels entlang einer radial zur Hochachse verlaufenden Längsachse erstreckt. Die Schneidkante des Schneidenabschnitts weist hierbei bezüglich der Längsachse zumindest abschnittsweise eine Vorwärtspfeilung auf. Der Wurzelabschnitt weist eine Wurzeltiefe und eine Vorderkante auf, wobei der radial äußerste Punkt der Schneidkante um einen Vorlaufabstand vor der Verlängerung der Vorderkante liegt. In zweckmäßiger Weiterbildung ist die Vorwärtspfeilung derart bemessen, dass das Verhältnis des Vorlaufabstandes zur Wurzeltiefe in einem Bereich von einschließlich 0,10 bis einschließlich 0,25 und insbesondere in einem Bereich von einschließlich 0,15 bis einschließlich 0,20 liegt. Alternativ oder zusätzlich kann es zweckmäßig sein, dass die Schneidkante des Schneidenabschnitts in einer senkrecht zur Hochachse liegenden Drehebene betrachtet zumindest abschnittsweise einen geradlinigen Verlauf aufweist. Die genannten Maßnahmen tragen zur Verbesserung der Schnittleistung und zur Verringerung des Geräuschpegels bei.

In einer bevorzugten Ausführungsform weist der Schneidenabschnitt im Querschnitt des Messerflügels betrachtet eine von der Schneidkante ausgehende und zur Hinterkante laufende, in der gewöhnlichen Einbauposition untere Kontur mit einem tiefsten Punkt auf, wobei die Hinterkante im Querschnitt der Schaufel betrachtet in einer Höhe oberhalb des tiefsten Punktes liegt, und wobei die Höhe entlang der Schaufel von radial innen nach radial außen abnimmt. Dies kann beispielsweise durch eine trapezförmige Ausgestaltung des Schaufelgrundrisses bei konstant gehaltenen Anstellwinkeln der einzelnen Flügelquerschnitte erzielt werden. Insbesondere aber weist der Messerflügel im Bereich des Schneidenabschnitts eine zumindest näherungsweise konstante Flügeltiefe sowie eine geometrische Schränkung zur Bildung der abnehmenden Höhe auf. Zweckmäßig weist der Messerflügel am radial inneren Ende des Schneidenabschnitts eine innere Höhe und am radial äußeren Ende des Schneidenabschnitts eine äußere Höhe mit einer Höhendifferenz zur inneren Höhe auf. Außerdem weist der Schneidenabschnitt eine mittlere Flügeltiefe auf. Das Verhältnis der Höhendifferenz zur mittleren Flügeltiefe liegt dabei bevorzugt in einem Bereich von einschließlich 0,15 bis einschließlich 0,3 und insbesondere in einem Bereich von einschließlich 0,15 bis einschließlich 0,2.

In zweckmäßiger Weiterbildung weist der Messerflügel am radial inneren Ende des Schneidenabschnitts eine innere Höhe auf, während der Schneidenabschnitt eine mittlere Flügeltiefe aufweist, wobei das Verhältnis der inneren Höhe zur mittleren Flügeltiefe in einem Bereich von einschließlich 0,25 bis einschließlich 0,45 und insbesondere in einem Bereich von einschließlich 0,30 bis einschließlich 0,40 liegt. Der Messerflügel weist eine radiale Flügellänge auf, während die aerodynamische Schaufel eine radiale Schaufellänge aufweist, wobei das Verhältnis der radialen Schaufellänge zur radialen Flügellänge zweckmäßig in einem Bereich von einschließlich 0,3 bis einschließlich 0,5 und insbesondere in einem Bereich von einschließlich 0,35 bis einschließlich 0,45 liegt. Der Messerflügel weist eine radiale Flügellänge auf, während die aerodynamische Schaufel eine mittlere Schaufeltiefe aufweist, wobei das Verhältnis der mittleren Schaufeltiefe zur radialen Flügellänge bevorzugt in einem Bereich von einschließlich 0,2 bis einschließlich 0,4 und insbesondere in einem Bereich von einschließlich 0,25 bis einschließlich 0,35 liegt.

Unter Beibehaltung eines einfachen konstruktiven Aufbaus ist die aerodynamische Auftriebsverteilung entlang der Messerachse optimiert, was insbesondere den induzierten Widerstand, damit den Leistungsbedarf und im Ergebnis die Geräuschentwicklung reduziert.

In vorteilhafter Weiterbildung weisen die Messerflügel jeweils radial innenseitig des Schneidenabschnitts und angrenzend an die Hochachse einen Wurzelabschnitt auf, wobei der Wurzelabschnitt und der Schneidenabschnitt jeweils mindestens eine Querschittsaussteifung insbesondere in Form einer Sicke und/oder einer Querschittskrümmung aufweisen, und wobei zwischen dem Wurzelabschnitt und dem Schneidenabschnitt eine Deformationszone mit verringerter Biegefestigkeit angeordnet ist. Mit anderen Worten sind sowohl der Schneidenabschnitt als auch der Wurzelabschnitt ausgesteift, während eine solche Querschnittsaussteifung in der dazwischen liegenden Deformationszone fehlt oder zumindest reduziert ist. Die Tragfähigkeit der Deformationszone wird in Dickenrichtung vorrangig durch die Tragfähigkeit des flachen Blechmaterials vorgegeben, ohne dass eine unterstützende Formstabilität eine Rolle spielt. Hierdurch ist sichergestellt, dass sich das Messer beim Auftreffen auf harte Fremdkörper wie Steine oder dergleichen zunächst elastisch, gegebenenfalls auch plastisch verformen kann, ohne dass weitergehende Schäden in den übrigen Bereichen des Messers oder sogar am Antriebsstrang des Rasenmähers zu befürchten sind.

Ausführungsbeispiele der Erfindung sind nachstehend anhand der Zeichnung näher erläutert. In der Zeichnung zeigt:
- Fig. 1: in einer Draufsicht eine Hälfte eines erfindungsgemäß ausgeführten Rasenmähermessers mit einer vorwärts gepfeilten und geradlinig verlaufenden Schneidkante,
- Fig. 2: in einer Frontansicht den Messerflügel nach Fig. 1 mit Einzelheiten zur Ausbildung des Schneidenabschnitts als aerodynamische Schaufel,
- Fig. 3: in einer Querschnittsdarstellung den Schneidenabschnitt des Messerflügels nach den Figuren 1 und 2 mit einer gekrümmten unteren Kontur,
- Fig. 4: in einer vergrößerten Detaildarstellung den Schneidenabschnitt nach Fig. 3 mit Einzelheiten zu seiner geometrischen Ausgestaltung, und
- Fig. 5: in einer Stirnansicht das Messer nach den Fig. 1 bis 4 mit Einzelheiten zur Schränkung des Schneidenabschnitts.

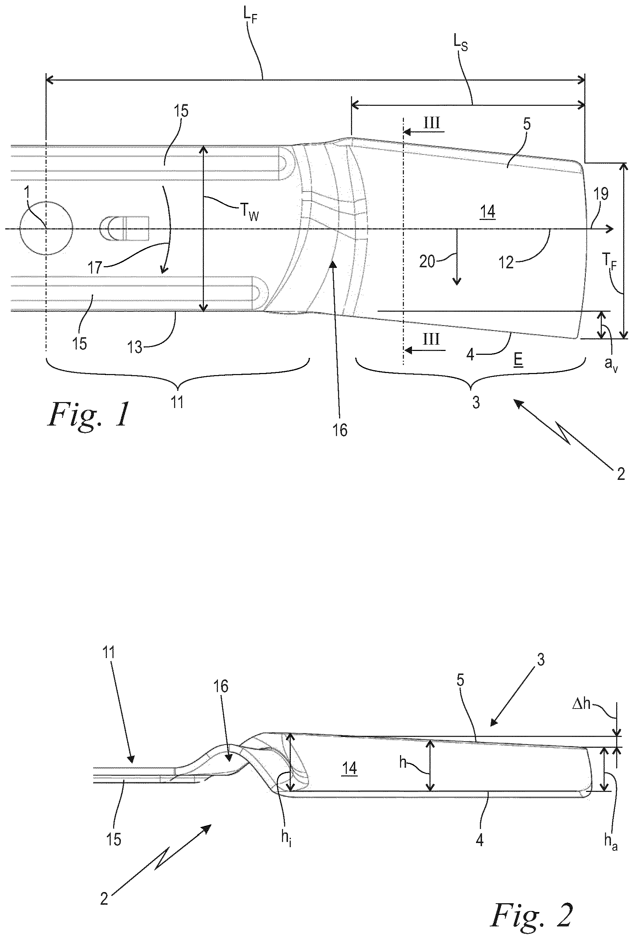

Fig. 1 zeigt in einer schematischen Draufsicht einen Messerflügel 2 eines erfindungsgemäß ausgeführten Messers für einen Rasenmäher. Um die Hochachse 1 herum sind mindestens zwei, hier genau zwei solcher Messerflügel 2 angeordnet, welche sich in einer senkrecht zur Hochachse 1 stehenden Radialrichtung 19 erstrecken. Es kann aber auch eine sternförmige Ausbildung mit drei oder mehr Messerflügeln zweckmäßig sein. Im Betrieb ist das montierte Messer um eine Hochachse 1 in einer durch einen Pfeil angegebenen regulären Drehrichtung 17 drehend angetrieben. Hierbei bewegen sich die Messerflügel 2 in einer Drehebene E, die der Zeichnungsebene der Fig. 1 entspricht. Alle hier aufgeführten Angaben betreffend die Begriffe "vorne" und "vorderer" bzw. "hinten" und "hinterer" beziehen sich auf diese für den Betrieb in gewöhnlicher Einbaulage vorgesehene Drehrichtung 17.

Im gezeigten Ausführungsbeispiel weist das erfindungsgemäße Messer insgesamt genau zwei rotationssymmetrisch zur Hochachse 1 angeordnete Messerflügel 2 auf, von denen hier der besseren Übersichtlichkeitshalber nur ein Messerflügel 2 dargestellt ist. Nachfolgend wird dieser eine Messerflügel 2 näher beschrieben, wobei sinngemäß das Gleiche auch für einen oder mehrere weiter noch vorhandene Messerflügel 2 gilt.

Radial außenseitig der Hochachse 1, also in der Radialrichtung 19 außen ist am äußeren Ende des Messerflügels 2 ein Schneidenabschnitt 3 ausgebildet. Unter Bezug auf die durch den Pfeil 17 angegebene vorgesehene Drehrichtung weist der Schneidenabschnitt 3 eine vorlaufende Kante und eine nachlaufende Kante auf. Die vorlaufende Kante ist entlang der radialen Erstreckung des Schneidenabschnitts 3 als geschärfte Schneidkante 4 ausgebildet, während die nachlaufende Kante eine ungeschärfte Hinterkante 5 ist. Eine Drehung des Messers um die Hochachse 1 in der Drehrichtung 17 führt an der geschärften Schneidkante 4 zu einer Bewegung in einer Schnittrichtung 20, welche senkrecht zur Hochachse 1 und zur Radialrichtung 19 steht. Unmittelbar angrenzend an die Hochachse 1 und bezogen auf die Radialrichtung 19 innenseitig des Schneidenabschnitts 3 positioniert weist der Messerflügel 2 einen Wurzelabschnitt 11 auf. Zwischen dem Wurzelabschnitt 11 und dem Schneidenabschnitt 3 befindet sich noch optional eine weiter unten näher beschriebene Deformationszone 16. Der Wurzelabschnitt 11 und die optionale Deformationszone 16 weisen im gezeigten Ausführungsbeispiel eine gemeinsame vorlaufende Vorderkante 13 auf, die abweichend von der Schneidkante 4 des Schneidenabschnitts 3 nicht geschärft ist. Mit anderen Worten gibt derjenige Bereich, in dem die vorlaufende Kante des Messerflügels 2 als geschärfte Schneidkante 4 ausgebildet ist, die radiale Erstreckung des Schneidenabschnitts 3 vor.

Der Wurzelabschnitt 11 und auch die Deformationszone 16 erstrecken sich in der radialen Richtung entlang einer senkrecht und radial zur Hochachse 1 verlaufenden Längsachse 12. Die Vorderkante 13 des Wurzelabschnitts 11 verläuft ebenso wie dessen nicht näher bezeichnete Hinterkante parallel zur Längsachse 12, woraus sich ein rechteckiger Grundriss des Wurzelabschnitts 11 mit einer Wurzeltiefe Tw ergibt. Die Schneidkante 4 des Schneidenabschnitts 3 weist bezüglich der Längsachse 12 zumindest abschnittsweise eine Vorwärtspfeilung auf, und zwar derart, dass der radial äußerste Punkt der Schneidkante 4 um einen Vorlaufabstand aᵥ bezogen auf die gewöhnliche Drehrichtung 17 vor der gedachten radialen Verlängerung der Vorderkante 13 liegt. Hierzu ist die Schneidkante 4 im gezeigten Ausführungsbeispiel gegenüber der ungeschärften Vorderkante 13 in der gezeigten Draufsicht abgeknickt und verläuft dann geradlinig nach radial außen und vorn. Die Schneidkante 4 des Schneidenabschnitts 3 kann aber auch in der gezeigten Draufsicht bzw. in der Drehebene E zumindest abschnittsweise, insbesondere aber entlang ihrer gesamten Erstreckung einen konkav gekrümmten Verlauf aufweisen. Dabei kann der konkav gekrümmte Verlauf der Schneidkante 4 tangentenstetig in den geradlinigen Verlauf der Vorderkante 13 übergehen. Das Verhältnis des Vorlaufabstandes aᵥ zur Wurzeltiefe T_{W} liegt vorteilhaft in einem Bereich von einschließlich 0,10 bis einschließlich 0,25, insbesondere in einem Bereich von einschließlich 0,15 bis einschließlich 0,20, und beträgt in dem gezeigten bevorzugten Ausführungsbeispiel etwa 0,18.

Aus der Draufsicht nach Fig. 1 ergibt sich noch, dass der Messerflügel 2 ausgehend von der Hochachse 1 bis zu seinem radial äußersten Ende eine radiale Flügellänge L_{F} aufweist, während der Schneidenabschnitt 3 eine Schneidenabschnittslänge Ls aufweist. Das Verhältnis der radialen Schneidenabschnittslänge Ls zur radialen Flügellänge L_{F} liegt vorteilhaft in einem Bereich von einschließlich 0,3 bis einschließlich 0,5 und insbesondere in einem Bereich von einschließlich 0,35 bis einschließlich 0,45. Außerdem ist erkennbar, dass der Schneidenabschnitt 3 eine mittlere Flügeltiefe T_{F} aufweist, und dass das Verhältnis der mittleren Flügeltiefe T_{F} zur radialen Flügellänge L_{F} in einem Bereich von einschließlich 0,2 bis einschließlich 0,4 und insbesondere in einem Bereich von einschließlich 0,25 bis einschließlich 0,35 liegt.

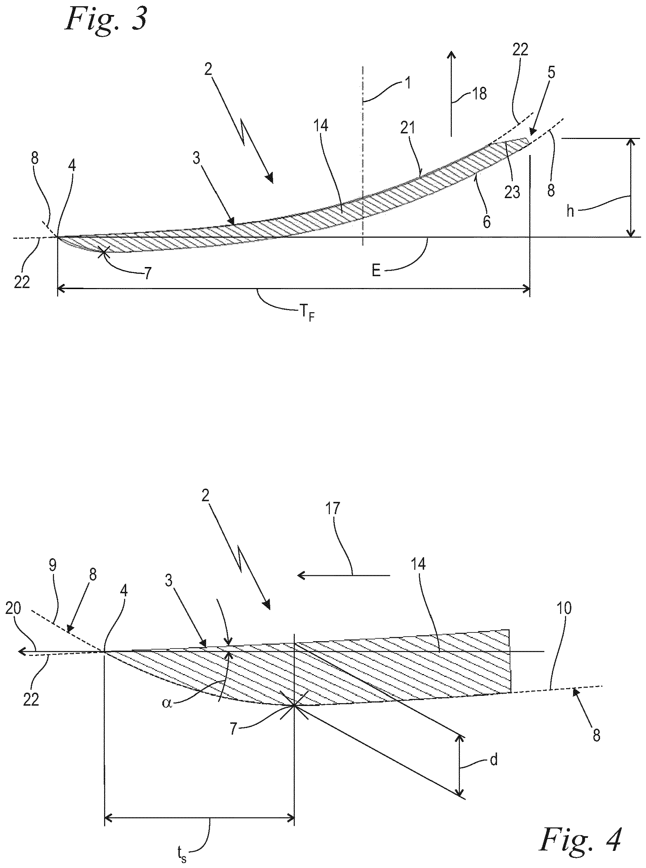

Fig. 3 zeigt in einer Querschnittsdarstellung den Schneidenabschnitt 3 des Messerflügels 2 nach Fig. 1 entlang der dort mit III-III markierten Schnittlinie. Demnach ist in der gewöhnlichen Einbaulage eine parallel zur Dreh- bzw. Hochachse 1 nach oben weisende Hochrichtung 18 vorgegeben, auf die sich hier alle Angaben bezüglich "oben" und "unten" beziehen. Der Schneidenabschnitt 3 ist nach Fig. 3 als aerodynamische Schaufel 14 ausgebildet, deren Hinterkante 5 im Querschnitt der Schaufel 14 betrachtet in einer Höhe h oberhalb der Schneidkante 4 liegt. Gemäß der Erfindung weist der Messerflügel 2 entlang der radialen Erstreckung der Schaufel 14 eine insbesondere kontinuierlich gekrümmte Querschnittsform mit einer konkaven Oberseite auf. Jedenfalls wird durch die Ausbildung als aerodynamische Schaufel 14 mit hinten hochstehender Hinterkante 5 erreicht, dass infolge der Drehbewegung in der Drehrichtung 17 die Umgebungsluft in der Hochrichtung 18 nach oben geblasen wird. Die Oberseite der Schaufel 14 ist also nach strömungsmechanischen Gesichtspunkten die Druckseite, während ihre Unterseite die Sogseite ist.

Die Querschnittsdarstellung nach Fig. 3 zeigt insbesondere, dass der Schneidenabschnitt 3 eine von der Schneidkante 4 ausgehende und zur Hinterkante 5 laufende, bezogen auf die Hochrichtung 18 der gewöhnlichen Einbauposition obere Kontur 21 aufweist. Diese obere Kontur 21 des Querschnitts ist ausgehend von der Schneidkante 4 über mindestens die Hälfte, bevorzugt über mindestens 75% und insbesondere über mindestens 90% der Flügeltiefe T_{F} durch eine obere Kurve 22 bestimmt. Im gezeigten bevorzugten Ausführungsbeispiel handelt es sich um etwa 90% der Flügeltiefe T_{F}. Der verbleibende Teil, hier also etwa 8% der Flügeltiefe T_{F} kann in anderer Weise ausgestaltet sein, wobei hierzu insbesondere eine an die Hinterkante 5 angrenzende Fase 23 vorgesehen ist. Die Krümmung der oberen Kurve 22 ist am Ort der Schneidkante 4 bevorzugt gleich Null. Es kann aber auch unmittelbar am Ort der Schneidkante 4 schon eine konvexe Krümmung vorgesehen sein. Jedenfalls steigt die obere Kurve 22 krümmungsstetig und zumindest abschnittsweise konvex in Richtung zur Hinterkante 5 an, wozu sie bevorzugt durch ein krümmungsstetiges Bezierpolynom dritten Grades bestimmt ist.

In der Querschnittsdarstellung nach Fig. 3 ist außerdem noch erkennbar, dass der Schneidenabschnitt 3 eine von der Schneidkante 4 ausgehende und zur Hinterkante 5 laufende, bezogen auf die Hochrichtung 18 der gewöhnlichen Einbauposition untere Kontur 6 aufweist. Diese untere Kontur 6 des Querschnitts weist ihrerseits einen in der Hochrichtung 18 gemessenen tiefsten Punkt 7 auf, von dem aus sie sowohl nach vorne zur Schneidkante 4 hin als auch nach hinten zur Hinterkante 5 hin in der Hochrichtung 18 ansteigt. Die genannte untere Kontur 6 ist zumindest abschnittsweise, hier vollständig durch eine gestrichelt angedeutete untere Kurve 8 bestimmt. Hinter dem tiefsten Punkt 7, namentlich in ihrem weiter unten im Zusammenhang mit Fig. 4 beschriebenen hinteren Kurvenabschnitt 10, verläuft die untere Kurve 8 äquidistant zur oberen Kurve 22, demnach hier die aerodynamische Schaufel 14 durch ein Blech mit einer in Tiefenrichtung konstanten, in Fig. 4 dargestellten Materialdicke d gebildet ist. Weitere Einzelheiten ergeben sich aus der vergrößerten Detaildarstellung nach Fig. 4.

Fig. 4 zeigt in einer vergrößerten Detaildarstellung den Schneidenabschnitt 3 nach Fig. 3 im Umfeld des tiefsten Punktes 7 und der geschärften Schneidkante 4. Es ist erkennbar, dass die obere Kurve 22 am Ort der Schneidkante 4 nicht parallel zur horizontalen Drehebene E bzw. zur Schnittrichtung 20, sondern in einem Eintrittswinkel α dazu verläuft. Der Eintrittswinkel α liegt vorteilhaft in einem Bereich von einschließlich 0° bis einschließlich 5° und insbesondere in einem Bereich von einschließlich 1,5° bis einschließlich 3,0°.

Aus der Zusammenschau der Figuren 3 und 4 ist erkennbar, dass sich die Kurve 8, welche die untere Kontur 6 des Querschnitts durch den Schneidenabschnitt 3 vorgibt, aus einem vorderen Kurvenabschnitt 9 und einem hinteren Kurvenabschnitt 10 zusammensetzt. Dabei liegt der vordere Kurvenabschnitt 9 bezogen auf die Drehrichtung 17 bzw. die Schnittrichtung 20 vor dem tiefsten Punkt 7, während der hintere Kurvenabschnitt 10 bezogen auf die Drehrichtung 17 bzw. die Schnittrichtung 20 hinter dem tiefsten Punkt 7 verläuft, und wobei sich beide Kurvenabschnitte 9, 10 im tiefsten Punkt 7 treffen.

Gemäß einer vorteilhaften Ausführungsform der Erfindung ist vorgesehen, dass die erste mathematische Ableitung der unteren Kurve 8 im tiefsten Punkt 7 gleich null ist. Die Kurve 8 verläuft hier also senkrecht zur Hochachse 1 bzw. parallel zur Drehebene E. Insbesondere kann vorgesehen sein, dass zumindest die erste mathematische Ableitung, bevorzugt auch die zweite mathematische Ableitung der unteren Kurve 8 im vorderen Kurvenabschnitt 9 stetig ist, demnach die untere Kurve 8 also knickfrei und gleichmäßig geschwungen verläuft. Außerdem ist insbesondere in der vergrößerten Detaildarstellung nach Fig. 4 erkennbar, dass gemäß einer bevorzugten Weiterbildung der Erfindung der vordere Kurvenabschnitt 9 und der hintere Kurvenabschnitt 10 im tiefsten Punkt 7 tangentenstetig ineinander übergehen, also dort ebenfalls keinen Knick aufweisen.

Der Zusammenschau der Figuren 3 und 4 ist noch eine weitere geometrische Besonderheit der Querschnittsgestaltung im Schneidenabschnitt 3 entnehmbar. Einerseits liegt die Schneidkante 4 in der Hochrichtung 18 oberhalb des tiefsten Punktes 7, wobei der Messerflügel 2 am Ort des tiefsten Punktes 7 eine Materialdicke d aufweist. Andererseits liegt die Schneidkante 4 im Querschnitt des Messerflügels 2 betrachtet um das Maß einer Schneidentiefe t_{S} in der Drehrichtung 17 vor dem tiefsten Punkt 7. Dabei liegt das Verhältnis der Schneidentiefe t_{S} zur Materialdicke d in einem Bereich von einschließlich 6,0 bis einschließlich 2,0 und insbesondere in einem Bereich von einschließlich 5,0 bis einschließlich 3,0.

Fig. 2 zeigt noch eine Frontansicht des Messerflügels 2 nach den Figuren 1, 3 und 4 im Bereich des als aerodynamische Schaufel 14 ausgebildeten Schneidenabschnitts 3. Während entlang der Radialrichtung für jeden Querschnitt durch den Schneidenabschnitt 3 das im Zusammenhang mit den Figuren 3 und 4 beschriebene Konstruktionsprinzip gilt, demnach hier insbesondere die Lage der Hinterkante in einer Höhe h oberhalb der Schneidkante 4 gilt, so ergibt sich aus der Frontansicht Fig. 2 noch eine graduelle Veränderung der diesbezüglichen absoluten Zahlenwerte. In der gezeigten bevorzugten Ausführungsform nach Fig. 2 nimmt nämlich die genannte Höhe h entlang des Schneidenabschnitts 3 von radial innen nach radial außen ab. Mit anderen Worten ist die Höhe h am radial inneren Ende des Schneidenabschnitts 3 eine innere Höhe hᵢ und am radial äußeren Ende des Schneidenabschnitts 3 eine äußere Höhe hₐ, wobei die innere Höhe hᵢ größer ist als die äußere Höhe hₐ. Zwischen der inneren Höhe hᵢ und der äußeren Höhe hₐ ergibt sich gemäß der Darstellung nach Fig. 2 eine Höhendifferenz Δₕ. Das Verhältnis der Höhendifferenz Δₕ zur mittleren Flügeltiefe T_{F} liegt bevorzugt in einem Bereich von einschließlich 0,15 bis einschließlich 0,3 und insbesondere in einem Bereich von einschließlich 0,15 bis einschließlich 0,2. Aus der Zusammenschau der Figuren 1 und 2 ergibt sich noch, dass das Verhältnis der inneren Höhe hᵢ zur mittleren Flügeltiefe T_{F} vorteilhaft in einem Bereich von einschließlich 0,25 bis einschließlich 0,45 und insbesondere in einem Bereich von einschließlich 0,30 bis einschließlich 0,40 liegt.

Aus der Zusammenschau der Figuren 2 und 3 ergibt sich noch, dass die konkave Querschnittskrümmung des Schneidenabschnitts 3 bzw. der aerodynamischen Schaufel 14 nicht nur einer vorteilhaften Luftführung, sondern auch einer mechanischen Querschnittsaussteifung dient. Der radial innere Wurzelabschnitt 11 ist zwar im Wesentlichen eben ohne eine solche konkave Querschnittskrümmung, erfährt jedoch eine Querschnittsaussteifung durch eingeprägte Sicken 15, die in den Figuren 1 und 2 erkennbar sind. Querschnittswölbungen und Sicken können natürlich auch in den jeweils anderen Bereichen zweckmäßig sein, und zwar alternativ oder in Kombination miteinander, außerdem kommen andere Maßnahmen der Querschnittsaussteifung in Betracht. Jedenfalls gelten die vorgenannten Querschnittsaussteifungen nicht oder nur in einem geringeren Umfang für die hier optional zwischen dem Wurzelabschnitt 11 und dem Schneidenabschnitt 3 angeordnete Deformationszone 16. Aus der Zusammenschau der Figuren 1, 2 und 5 ergibt sich, dass der Querschnitt des Messerflügels 2 in der Deformationszone 16 kaum gewölbt und beinahe geradlinig ist, und folglich im Vergleich zum Wurzelabschnitt 11 und auch zum Schneidenabschnitt 3 eine reduzierte Steifigkeit und auch eine reduzierte Festigkeit aufweist. Jedenfalls sind das in der Hochrichtung 18 wirkende Flächenträgheitsmoment und insbesondere das in der Hochrichtung 18 wirkende mechanische Widerstandsmoment der Deformationszone 16 derart gegenüber den korrespondierenden Werten des Wurzelabschnitts 1 und des Schneidenabschnitts 3 verringert, dass der Schneidenabschnitt 3 im Überlastfall gegenüber dem Wurzelabschnitt 11 nachgeben und radial nach oben auslenken kann.

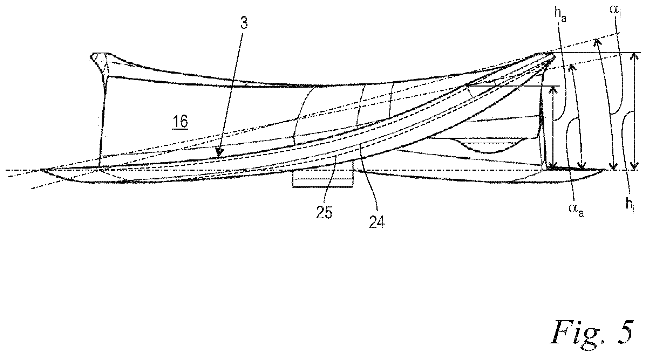

Fig. 5 zeigt noch in einer Stirnansicht das Messer nach den Fig. 1 bis 4 mit Einzelheiten zur Querschnittsverteilung im Bereich des Schneidenabschnitts 3. Weiter oben wurde schon darauf hingewiesen, dass die innere Höhe hᵢ größer ist als die äußere Höhe hₐ. Dies kann beispielsweise durch eine Zuspitzung des Messergrundrisses, gegebenenfalls auch in Kombination mit einem nicht verdrehten, also ungeschränkten Querschnittsverlauf erreicht werden. Im gezeigten Ausführungsbeispiel weist der Messerflügel 2 im Bereich der Schaufel 14 entlang der radialen Erstreckung eine zumindest näherungsweise konstante Flügeltiefe T_{F} auf und ist darüber hinaus mit einer geometrischen Schränkung, also mit einer entlang der Radialrichtung vorgenommen Querschnittsverdrehung derart versehen, dass die Höhe h von der inneren Höhe hᵢ zur äußeren Höhe hₐ abnimmt. Zur Darstellung der genannten Querschnittsverdrehung ist neben dem ohnehin in dieser Ansicht erkennbaren radial äußeren Querschnitt, der hier mit 24 bezeichnet ist, auch noch gestrichelt ein radial innerer Querschnitt 25 des Schneidenbereichs 3 angedeutet. In beiden Fällen ist noch jeweils eine Berührlinie eingezeichnet, die tangentenartig auf der jeweiligen Oberseite der beiden genannten Referenzquerschnitte 24, 25 aufliegt. Diese Berührlinien zeigen jeweils einen Anstellwinkel γ relativ zur Schnittrichtung 20 an. Aufgrund der konstanten Flügeltiefe T_{F} in Verbindung mit der Differenz zwischen der inneren Höhe hᵢ und der äußeren Höhe hₐ gibt es auch eine Querschnittsverdrehung entlang der Radialerstreckung des Schneidenabschnitts 3 mit einem inneren Anstellwinkel γᵢ und einem äußeren Anstellwinkel γₐ. Der Anstellwinkel γ umspannt im gezeigten Ausführungsbeispiel einen Bereich vom inneren Anstellwinkel γᵢ mit etwa 16° bis zum äußeren Anstellwinkel γₐ mit etwa 12°. Es können aber auch Winkelverläufe zweckmäßig sein, die etwa in einem Bereich von 25° bis 5° und insbesondere von etwa 20° bis 10° liegen. Alternativ kann es zweckmäßig sein, dass die Querschnitte des Schneidenabschnitts 3 entlang dessen Längserstreckung in einem konstanten Anstellwinkel γ liegen, ohne dass also eine Querschnittsverdrehung vorgesehen ist.

## Patentansprüche

1. Messer eines Rasenmähers, mit einer Hochachse (1), mit einer senkrecht zur Hochachse (1) stehenden Radialrichtung (19) und mit einer senkrecht zur Hochachse (1) und zur Radialrichtung (19) stehenden Schnittrichtung (20), wobei das Messer mindestens zwei um die Hochachse (1) herum angeordnete Messerflügel (2) aufweist, wobei die Messerflügel (2) in der Radialrichtung (19) außenseitig jeweils einen Schneidenabschnitt (3) mit einer Flügeltiefe (T_{F}), mit einer vorlaufenden geschärften Schneidkante (4) und mit einer nachlaufenden Hinterkante (5) aufweisen, wobei der Schneidenabschnitt (3) im Querschnitt des Messerflügels (2) betrachtet eine von der Schneidkante (4) ausgehende und zur Hinterkante (5) laufende, in der gewöhnlichen Einbauposition obere Kontur (21) aufweist, wobei die obere Kontur (21) über mindestens die Hälfte der Flügeltiefe (T_{F}) durch eine obere Kurve (22) bestimmt ist, wobei die obere Kurve (22) krümmungsstetig und zumindest abschnittsweise konvex in Richtung zur Hinterkante (5) ansteigt,
**dadurch gekennzeichnet, dass** die obere Kurve (22) von der Schneidkante (4) ausgeht und am Ort der Schneidkante (4) in einem Eintrittswinkel (a) zur Schnittrichtung (20) verläuft, und wobei der Eintrittswinkel (a) in einem Bereich von einschließlich 0° bis einschließlich 5° und insbesondere in einem Bereich von einschließlich 1,5° bis einschließlich 3,0° liegt.

2. Messer nach Anspruch 1,
**dadurch gekennzeichnet, dass** die obere Kontur (21) ausgehend von der Schneidkante (4) über mindestens 75% und insbesondere über mindestens 90% der Flügeltiefe (T_{F}) durch die krümmungsstetige und konvexe obere Kurve (22) bestimmt ist.

3. Messer nach Anspruch 1 oder 2,
**dadurch gekennzeichnet, dass** die Krümmung der oberen Kurve (22) am Ort der Schneidkante (4) gleich Null ist.

4. Messer nach einem der Ansprüche 1 bis 3,
**dadurch gekennzeichnet, dass** die obere Kurve (22) durch ein krümmungsstetiges Bezierpolynom dritten Grades bestimmt ist.

5. Messer nach einem der Ansprüche 1 bis 4,
**dadurch gekennzeichnet, dass** der Schneidenabschnitt (3) im Querschnitt des Messerflügels (2) betrachtet eine von der Schneidkante (4) ausgehende und zur Hinterkante (5) laufende, in der gewöhnlichen Einbauposition untere Kontur (6) mit einem tiefsten Punkt (7) aufweist, und dass die Schneidkante (4) im Querschnitt des Messerflügels (2) betrachtet oberhalb des tiefsten Punktes (7) liegt.

6. Messer nach einem der Ansprüche 1 bis 5,
**dadurch gekennzeichnet, dass** die untere Kontur (6) zumindest abschnittsweise durch eine untere Kurve (8) bestimmt ist, wobei die untere Kurve (8) zwischen dem tiefsten Punkt (7) und der Schneidkante (4) einen vorderen Kurvenabschnitt (9) aufweist, wobei die erste Ableitung der unteren Kurve (8) im tiefsten Punkt (7) gleich null sowie in ihrem vorderen Kurvenabschnitt (9) stetig ist, und wobei insbesondere die zweite Ableitung der unteren Kurve (8) im vorderen Kurvenabschnitt (9) stetig ist.

7. Messer nach Anspruch 6,
**dadurch gekennzeichnet, dass** die Kurve (8) zwischen dem tiefsten Punkt (7) und der Hinterkante (5) einen hinteren Kurvenabschnitt (10) aufweist, und dass der vordere Kurvenabschnitt (9) und der hintere Kurvenabschnitt (10) im tiefsten Punkt (7) tangentenstetig ineinander übergehen.

8. Messer nach einem der Ansprüche 5 bis 7,
**dadurch gekennzeichnet, dass** der Messerflügel (2) am Ort des tiefsten Punktes (7) eine Materialdicke (d) aufweist, dass die Schneidkante (4) im Querschnitt des Messerflügels (2) betrachtet um das Maß einer Schneidentiefe (ts) vor dem tiefsten Punktes (7) liegt, und dass das Verhältnis der Schneidentiefe (ts) zur Materialdicke (d) in einem Bereich von einschließlich 6,0 bis einschließlich 2,0 und insbesondere in einem Bereich von einschließlich 5,0 bis einschließlich 3,0 liegt.

9. Messer nach einem der Ansprüche 1 bis 8,
**dadurch gekennzeichnet, dass** die Messerflügel (2) angrenzend an die Hochachse (1) einen Wurzelabschnitt (11) aufweisen, wobei sich der Wurzelabschnitt (11) des jeweiligen Messerflügels (2) entlang einer radial zur Hochachse (1) verlaufenden Längsachse (12) erstreckt, und dass die Schneidkante (4) des Schneidenabschnitts (3) bezüglich der Längsachse (12) des Wurzelabschnitts (11) zumindest abschnittsweise eine Vorwärtspfeilung aufweist.

10. Messer nach Anspruch 9,
**dadurch gekennzeichnet, dass** der Wurzelabschnitt (11) eine Wurzeltiefe (Tw) und eine Vorderkante (13) aufweist, dass der radial äußerste Punkt der Schneidkante (4) um einen Vorlaufabstand (aᵥ) vor der Verlängerung der Vorderkante (13) liegt, und dass die Vorwärtspfeilung derart bemessen ist, dass das Verhältnis des Vorlaufabstandes (aᵥ) zur Wurzeltiefe (T_{W}) in einem Bereich von einschließlich 0,10 bis einschließlich 0,25 und insbesondere in einem Bereich von einschließlich 0,15 bis einschließlich 0,20 liegt.

11. Messer nach einem der Ansprüche 1 bis 10,
**dadurch gekennzeichnet, dass** die Schneidkante (4) des Schneidenabschnitts (3) in einer senkrecht zur Hochachse (1) liegenden Drehebene (E) betrachtet zumindest abschnittsweise einen geradlinigen Verlauf aufweist.

12. Messer nach einem der Ansprüche 1 bis 11,
**dadurch gekennzeichnet, dass** der Schneidenabschnitt (3) im Querschnitt des Messerflügels (2) betrachtet eine von der Schneidkante (4) ausgehende und zur Hinterkante (5) laufende, in der gewöhnlichen Einbauposition untere Kontur (6) mit einem tiefsten Punkt (7) aufweist, dass die Hinterkante (5) im Querschnitt der Schaufel (14) betrachtet in einer Höhe (h) oberhalb der Schneidkante (4) liegt, dass die Höhe (h) entlang des Schneidenabschnitts (3) von radial innen nach radial außen abnimmt, und dass insbesondere der Messerflügel (2) im Bereich des Schneidenabschnitts (3) eine zumindest näherungsweise konstante Flügeltiefe (T_{F}) sowie eine Schränkung zur Bildung der abnehmenden Höhe (h) aufweist.

13. Messer nach Anspruch 12,
**dadurch gekennzeichnet, dass** der Messerflügel (2) am radial inneren Ende des Schneidenabschnitts (3) eine innere Höhe (hi) und am radial äußeren Ende des Schneidenabschnitts (3) eine äußere Höhe (hₐ) mit einer Höhendifferenz (Δₕ) zur inneren Höhe (hᵢ) aufweist, dass der Schneidenabschnitt (3) eine mittlere Flügeltiefe (T_{F}) aufweist, und dass das Verhältnis der Höhendifferenz (Δₕ) zur mittleren Flügeltiefe (T_{F}) in einem Bereich von einschließlich 0,15 bis einschließlich 0,3 und insbesondere in einem Bereich von einschließlich 0,15 bis einschließlich 0,2 liegt.

14. Messer nach Anspruch 12 oder 13,
**dadurch gekennzeichnet, dass** der Messerflügel (2) am radial inneren Ende des Schneidenabschnitts (3) eine innere Höhe (hi) aufweist, dass der Schneidenabschnitt (3) eine mittlere Flügeltiefe (T_{F}) aufweist, und dass das Verhältnis der inneren Höhe (hi) zur mittleren Flügeltiefe (T_{F}) in einem Bereich von einschließlich 0,25 bis einschließlich 0,45 und insbesondere in einem Bereich von einschließlich 0,30 bis einschließlich 0,40 liegt.

15. Messer nach einem der Ansprüche 1 bis 14,
**dadurch gekennzeichnet, dass** der Messerflügel (2) eine radiale Flügellänge (L_{F}) aufweist, dass der Schneidenabschnitt (3) eine radiale Schneidenabschnittslänge (L_{S}) aufweist, und dass das Verhältnis der radialen Schneidenabschnittslänge (L_{S}) zur radialen Flügellänge (L_{F}) in einem Bereich von einschließlich 0,3 bis einschließlich 0,5 und insbesondere in einem Bereich von einschließlich 0,35 bis einschließlich 0,45 liegt.

16. Messer nach einem der Ansprüche 1 bis 15,
**dadurch gekennzeichnet, dass** der Messerflügel (2) eine radiale Flügellänge (L_{F}) aufweist, dass der Schneidenabschnitt (3) eine mittlere Flügeltiefe (T_{F}) aufweist, und dass das Verhältnis der mittleren Flügeltiefe (T_{F}) zur radialen Flügellänge (L_{F}) in einem Bereich von einschließlich 0,2 bis einschließlich 0,4 und insbesondere in einem Bereich von einschließlich 0,25 bis einschließlich 0,35 liegt.

17. Messer nach einem der Ansprüche 1 bis 16,
**dadurch gekennzeichnet, dass** die Messerflügel (2) jeweils radial innenseitig des Schneidenabschnitts (3) und angrenzend an die Hochachse (1) einen Wurzelabschnitt (11) aufweisen, wobei der Wurzelabschnitt (11) und der Schneidenabschnitt (3) jeweils mindestens eine Querschnittsaussteifung insbesondere in Form einer Sicke (15) und/oder einer Querschnittskrümmung aufweisen, und dass zwischen dem Wurzelabschnitt (11) und dem Schneidenabschnitt (3) eine Deformationszone (16) mit verringerter Biegefestigkeit angeordnet ist.

## Claims

1. Blade of a lawnmower, with a vertical axis (1), with a radial direction (19) perpendicular to the vertical axis (1) and with a cutting direction (20) perpendicular to the vertical axis (1) and to the radial direction (19), wherein the blade has at least two blade wings (2) arranged around the vertical axis (1), wherein each of the blade wings (2) has, in the radial direction (19) on the outside, an edge section (3) with a wing depth (T_{F}), a leading sharpened cutting edge (4) and a trailing rear edge (5), wherein the edge section (3) has, if viewed in the cross-section of the blade wing (2), a contour (21) starting from the cutting edge (4) and running towards the rear edge (5), this being an upper contour (21) in the usual installed position, wherein the upper contour (21) is defined by an upper curve (22) along at least half of the wing depth (T_{F}), wherein the upper curve (22) has a constant curvature and at least sections thereof rise in a convex manner in the direction towards the rear edge (5),
**characterised in that** the upper curve (22) starts from the cutting edge (4) and extends at the position of the cutting edge (4) at an entry angle (α) to the cutting direction (20), wherein the entry angle (α) lies in a range of 0° to 5° inclusive and in particular in a range of 1.5° to 3.0° inclusive.

2. Blade according to claim 1,
**characterised in that** the upper contour (21) is, starting from the cutting edge (4), defined by the constant-curvature and convex upper curve (22) across at least 75% and in particular across at least 90% of the wing depth (T_{F}).

3. Blade according to claim 1 or 2,
**characterised in that** the curvature of the upper curve (22) is zero at the position of the cutting edge (4).

4. Blade according to any of claims 1 to 3,
**characterised in that** the upper curve (22) is defined by a constant-curvature Bezier polynomial of the third degree.

5. Blade according to any of claims 1 to 4,
**characterised in that** the edge section (3) has, if viewed in the cross-section of the blade wing (2), a contour (6) starting from the cutting edge (4) and running towards the rear edge (5), this being a lower contour (6) in the usual installed position and having a lowest point (7), and **in that** the cutting edge (4) lies above the lowest point (7) if viewed in the cross-section of the blade wing (2).

6. Blade according to any of claims 1 to 5,
**characterised in that** at least a section of the lower contour (6) is defined by a lower curve (8), wherein the lower curve (8) has a front curve section (9) between the lowest point (7) and the cutting edge (4), wherein the first derivative of the lower curve (8) is zero at the lowest point (7) and constant in its front curve section (9), and wherein the second derivative of the lower curve (8) in particular is constant in the front curve section (9).

7. Blade according to claim 6,
**characterised in that** the curve (8) has a rear curve section (10) between the lowest point (7) and the and the rear edge (5), and **in that** the front curve section (9) and the rear curve section (10) merge at the lowest point (7) in a tangentially constant manner.

8. Blade according to any of claims 5 to 7,
**characterised in that** the blade wing (2) has a material thickness (d) at the position of the lowest point (7), **in that** the cutting edge (4) lies, if viewed in the cross-section of the blade wing (2), in front of the lowest point (7) by the measure of an edge depth (t_{S}), and **in that** the ratio between the edge depth (t_{S}) and the material thickness (d) lies in a range of 6.0 to 2.0 inclusive and in particular in a range of 5.0 to 3.0 inclusive.

9. Blade according to any of claims 1 to 8,
**characterised in that** the blade wings (2) have a root section (11) adjoining the vertical axis (1), wherein the root section (11) of the respective blade wing (2) extends along a longitudinal axis (12) running radially to the vertical axis (1), and **in that** at least a section of the cutting edge (4) of the edge section (3) has a forward sweep with respect to the longitudinal axis (12) of the root section (11).

10. Blade according to claim 9,
**characterised in that** the root section (11) has a root depth (T_{W}) and a front edge (13), **in that** the radially outermost point of the cutting edge (4) lies in front of the extension of the front edge (13) by a forward distance (aᵥ), and **in that** the forward sweep is dimensioned such that the ratio between the forward distance (aᵥ) and the root depth (T_{W}) lies in a range of 0.10 to 0.25 inclusive and in particular in a range of 0.15 to 0.20 inclusive.

11. Blade according to any of claims 1 to 10,
**characterised in that** at least a section of the cutting edge (4) of the edge section (3) is straight if viewed in a rotary plane (E) perpendicular to the vertical axis (1).

12. Blade according to any of claims 1 to 11,
**characterised in that** the edge section (3) has, if viewed in the cross-section of the blade wing (2), a contour (6) starting from the cutting edge (4) and running towards the rear edge (5), this being a lower contour (6) in the usual installed position and having a lowest point (7), **in that** the rear edge (5) lies, if viewed in the cross-section of the blade (14), at a height (h) above the cutting edge (4), **in that** the height (h) decreases along the edge section (3) from a radially inward to a radially outward position, and **in that** the blade wing (2) in particular has in the region of the edge section (3) an at least approximately constant wing depth (T_{F}) and a twist for forming the decreasing height (h).

13. Blade according to claim 12,
**characterised in that** the blade wing (2) has at the radially inner end of the edge section (3) an inner height (hi) and at the radially outer end of the edge section (3) an outer height (hₐ) with a height difference (Aₕ) to the inner height (hᵢ), **in that** the edge section (3) has a mean wing depth (T_{F}), and **in that** the ratio between the height difference (Aₕ) and the mean wing depth (T_{F}) lies in a range of 0.15 to 0.3 inclusive and in particular in a range of 0.15 to 0.2 inclusive.

14. Blade according to claim 12 or 13,
**characterised in that** the blade wing (2) has at the radially inner end of the edge section (3) an inner height (hᵢ), **in that** the edge section (3) has a mean wing depth (T_{F}), and **in that** the ratio between the inner height (hi) and the mean wing depth (T_{F}) lies in a range of 0.25 to 0.45 inclusive and in particular in a range of 0.30 to 0.40 inclusive.

15. Blade according to any of claims 1 to 14,
**characterised in that** the blade wing (2) has a radial wing length (L_{F}), **in that** the edge section (3) has a radial edge section length (L_{S}), and **in that** the ratio between the radial edge section length (L_{S}) and the radial wing length (L_{F}) lies in a range of 0.3 to 0.5 inclusive and in particular in a range of 0.35 to 0.45 inclusive.

16. Blade according to any of claims 1 to 15,
**characterised in that** the blade wing (2) has a radial wing length (L_{F}), **in that** the edge section (3) has a mean wing depth (T_{F}), and **in that** the ratio between the mean wing depth (T_{F}) and the radial wing length (L_{F}) lies in a range of 0.2 to 0.4 inclusive and in particular in a range of 0.25 to 0.35 inclusive.

17. Blade according to any of claims 1 to 16,
**characterised in that** each of the blade wings (2) has, radially inward of the edge section (3) and adjoining the vertical axis (1), a root section (11), wherein the root section (11) and the edge section (3) have at least one cross-sectional reinforcement each, in particular in the form of a ribbing (15) or a cross-sectional curvature, and **in that** a deformation zone (16) with a reduced bending strength is located between the root section (11) and the edge section (3).

## Revendications

1. Lame d'une tondeuse à gazon, avec un axe vertical (1), avec une direction radiale (19) perpendiculaire à l'axe vertical (1) et avec une direction de coupe (20) perpendiculaire à l'axe vertical (1) et à la direction radiale (19), dans laquelle la lame présente au moins deux ailettes de lame (2) disposées autour de l'axe vertical (1), dans laquelle les ailettes de lame (2) présentent dans la direction radiale (19) côté extérieur respectivement une partie tranchant (3) avec une profondeur d'ailette (T_{F}), avec un tranchant (4) en amont aiguisé et avec un bord arrière (5) en aval, dans laquelle la partie tranchant (3), dans une vue dans la coupe transversale de l'ailette de lame (2), présente un contour supérieur (21) dans la position de montage habituelle partant du tranchant (4) et courant en direction du bord arrière (5), dans laquelle le contour supérieur (21) est défini sur au moins la moitié de la profondeur d'ailette (T_{F}) par une courbe supérieure (22), dans laquelle la courbe supérieure (22) s'élève en présentant une courbure continue et au moins par endroits de manière convexe en direction du bord arrière (5),
**caractérisée en ce que** la courbe supérieure (22) part du tranchant (4) et s'étend à l'endroit du tranchant (4) en formant un angle d'attaque (α) par rapport à la direction de coupe (20), et dans laquelle l'angle d'attaque (α) se situe dans une plage de 0° compris à 5° compris et en particulier dans une plage de 1,5° compris à 3,0° compris.

2. Lame selon la revendication 1,
**caractérisée en ce que** le contour supérieur (21) est défini en partant du tranchant (4) sur au moins 75 % et en particulier sur au moins 90 % de la profondeur d'ailette (T_{F}) par la courbe supérieure (22) convexe et présentant une courbure continue.

3. Lame selon la revendication 1 ou 2,
**caractérisée en ce que** la courbure de la courbe supérieure (22) à l'endroit du tranchant (4) est égale à zéro.

4. Lame selon l'une des revendications 1 à 3,
**caractérisée en ce que** la courbe supérieure (22) est définie par un polynôme de Bézier de troisième degré présentant une courbure continue.

5. Lame selon l'une des revendications 1 à 4,
**caractérisée en ce que** la partie tranchant (3), dans une vue dans la coupe transversale de l'ailette de lame (2), présente un contour inférieur (6) avec un point le plus bas (7) dans la position de montage habituelle, partant du tranchant (4) et courant en direction du bord arrière (5), et que le tranchant (4), dans une vue dans la coupe transversale de l'ailette de lame (2), se situe au-dessus du point le plus bas (7).

6. Lame selon l'une des revendications 1 à 5,
**caractérisée en ce que** le contour inférieur (6) est défini au moins par endroits par une courbe inférieure (8), dans laquelle la courbe inférieure (8) présente entre le point le plus bas (7) et le tranchant (4) une partie avant de courbe (9), dans laquelle la première dérivée de la courbe inférieure (8) au point le plus bas (7) est égale à zéro et est continue dans sa partie avant de courbe (9), et dans laquelle en particulier la deuxième dérivée de la courbe inférieure (8) est continue dans la partie avant de courbe (9).

7. Lame selon la revendication 6,
**caractérisée en ce que** la courbe (8) présente entre le point le plus bas (7) et le bord arrière (5) une partie arrière de courbe (10), et que la partie avant de courbe (9) et la partie arrière de courbe (10) passent l'une dans l'autre de manière continuellement tangentielle au point le plus bas (7).

8. Lame selon l'une des revendications 5 à 7,
**caractérisée en ce que** l'ailette de lame (2) présente à l'endroit du point le plus bas (7) une épaisseur de matériau (d), que le tranchant (4) se situe, dans une vue dans la coupe transversale de l'ailette de lame (2), devant le point le plus bas (7) selon la grandeur d'une profondeur de tranchant (tₛ), et que le rapport de la profondeur de tranchant (tₛ) sur l'épaisseur de matériau (d) se situe dans une plage de 6,0 compris à 2,0 compris et en particulier dans une plage de 5,0 compris à 3,0 compris.

9. Lame selon l'une des revendications 1 à 8,
**caractérisée en ce que** les ailettes de lame (2) présentent de manière adjacente à l'axe vertical (1) une partie pied (11), dans laquelle la partie pied (11) de l'ailette de lame (2) respective s'étend le long d'un axe longitudinal (12) s'étendant radialement par rapport à l'axe vertical (1), et que le tranchant (4) de la partie tranchant (3) présente par rapport à l'axe longitudinal (12) de la partie pied (11), au moins par endroits, une cambrure avant.

10. Lame selon la revendication 9,
**caractérisée en ce que** la partie pied (11) présente une profondeur de pied (Tw) et un bord avant (13), que le point radialement le plus extérieur du tranchant (4) se situe devant le prolongement du bord avant (13) suivant un écart avant (aᵥ), et que la cambrure avant est calculée de telle sorte que le rapport de l'écart avant (aᵥ) sur la profondeur de pied (T_{W}) se situe dans une plage de 0,10 compris à 0,25 compris et en particulier dans une plage de 0,15 compris à 0,20 compris.

11. Lame selon l'une des revendications 1 à 10,
**caractérisée en ce que** le tranchant (4) de la partie tranchant (3) présente au moins par endroits un tracé rectiligne, dans une vue dans un plan de rotation (E) situé perpendiculairement à l'axe vertical (1).

12. Lame selon l'une des revendications 1 à 11,
**caractérisée en ce que** la partie tranchant (3) présente, dans une vue dans la coupe transversale de l'ailette de lame (2), un contour inférieur (6) avec un point le plus bas (7) dans la position de montage habituelle, partant du tranchant (4) et courant en direction du bord arrière (5), que le bord arrière (5), dans une vue dans la coupe transversale de l'aube (14), se situe à une hauteur (h) au-dessus du tranchant (4), que la hauteur (h) diminue de radialement à l'intérieur vers radialement à l'extérieur le long de la partie tranchant (3), et que, en particulier, l'ailette de lame (2) présente dans la zone de la partie tranchant (3) une profondeur d'ailette (T_{F}) au moins presque constante ainsi qu'un décalage pour la formation de la hauteur (h) décroissante.

13. Lame selon la revendication 12,
**caractérisée en ce que** l'ailette de lame (2) présente à l'extrémité radialement intérieure de la partie tranchant (3) une hauteur intérieure (hᵢ) et à l'extrémité radialement extérieure de la partie tranchant (3) une hauteur extérieure (hₐ) avec une différence de hauteur (Δₕ) par rapport à la hauteur intérieure (hᵢ), que la partie tranchant (3) présente une profondeur moyenne d'ailette (T_{F}), et que le rapport de la différence de hauteur (Δₕ) sur la profondeur moyenne d'ailette (T_{F}) se situe dans une plage de 0,15 compris à 0,3 compris et en particulier dans une plage de 0,15 compris à 0,2 compris.

14. Lame selon la revendication 12 ou 13,
**caractérisée en ce que** l'ailette de lame (2) présente à l'extrémité radialement intérieure de la partie tranchant (3) une hauteur intérieure (hᵢ), que la partie tranchant (3) présente une profondeur moyenne d'ailette (T_{F}), et que le rapport de la hauteur intérieure (hᵢ) sur la profondeur moyenne d'ailette (T_{F}) se situe dans une plage de 0,25 compris à 0,45 compris et en particulier dans une plage de 0,30 compris à 0,40 compris.

15. Lame selon l'une des revendications 1 à 14,
**caractérisée en ce que** l'ailette de lame (2) présente une longueur radiale d'ailette (L_{F}), que la partie tranchant (3) présente une longueur radiale de partie tranchant (L_{S}), et que le rapport de la longueur radiale de partie tranchant (L_{S}) sur la longueur radiale d'ailette (L_{F}) se situe dans une plage de 0,3 compris à 0,5 compris et en particulier dans une plage de 0,35 compris à 0,45 compris.

16. Lame selon l'une des revendications 1 à 15,
**caractérisée en ce que** l'ailette de lame (2) présente une longueur radiale d'ailette (L_{F}), que la partie tranchant (3) présente une profondeur moyenne d'ailette (T_{F}), et que le rapport de la profondeur moyenne d'ailette (T_{F}) sur la longueur radiale d'ailette (L_{F}) se situe dans une plage de 0,2 compris à 0,4 compris et en particulier dans une plage de 0,25 compris à 0,35 compris.

17. Lame selon l'une des revendications 1 à 16,
**caractérisée en ce que** les ailettes de lame (2) présentent respectivement radialement côté intérieur de la partie tranchant (3) et de manière adjacente à l'axe vertical (1) une partie pied (11), dans laquelle la partie pied (11) et la partie tranchant (3) présentent respectivement au moins un renforcement de section, prenant en particulier la forme d'une moulure (15) et/ou d'une courbure de section, et qu'une zone de déformation (16) à rigidité en flexion réduite est disposée entre la partie pied (11) et la partie tranchant (3).
